# EUROPÄISCHE PATENTSCHRIFT

(11) **EP 0 618 101 B1**
(45) Veröffentlichungstag und Bekanntmachung des Hinweises auf die Patenterteilung: **16.04.1997**
(21) Anmeldenummer: 94102047.1
(22) Anmeldetag: 10.02.1994
(51) Int. Cl.: B60J 10/02, B60J 1/17

(54) **Dichtungseinrichtung für eine vorzugsweise rahmenlose Sichtscheibe eines Kraftfahrzeuges**
Sealing arrangement for a preferably frameless window pane of a motor vehicle
Dispositif d'étanchéité pour une vitre de préférence sans cadre pour un véhicule

(30) Priorität: 02.04.1993 DE 4310880; 18.06.1993 DE 4320330
(43) Veröffentlichungstag der Anmeldung: 05.10.1994
(73) Patentinhaber: Dr.Ing. H.C.F. PORSCHE AKTIENGESELLSCHAFT, D-70432 Stuttgart (DE)
(72) Erfinder: Beierl, Dominik, D-70825 Korntal-Münchingen (DE); Raisch, Dieter, D-71277 Rutesheim (DE); Schlachter, Reimund, D-71277 Rutesheim (DE)

(56) Entgegenhaltungen:
- DE-A- 3 836 687
- GB-A- 1 474 563

## Beschreibung

Die Erfindung betrifft eine Dichtungseinrichtung für eine vorzugsweise rahmenlose Sichtscheibe eines Kraftfahrzeuges gemäß dem Oberbegriff des Patentanspruchs 1.

Bei einer bekannten Dichtungseinrichtung (US-A-40 60 272) wird zuerst ein mit einer hinterschnittenen Aufnahme versehenes Halteelement mittels Schrauben am darüberliegenden Dachrahmen befestigt. Danach wird der Dichtkörper in die Aufnahme des Haltelelemtes eingesetzt. Stellt man nun bei der Montage fest, daß der Dichtkörper nicht lagerichtig zur Sichtscheibe sitzt, so muß der Dichtkörper wieder aus dem Halteelement herausgenommen werden und erst danach kann die Lage des Halteelementes neu eingestellt werden. Dieser Anordnung haftet der Nachteil an, daß die Dichtungseinrichtung aus zwei separaten Teilen besteht und daß die Montage und Einstellung der Dichtungseinrichtung umständlich und zeitaufwendig ist.

Aufgabe der Erfindung ist es, eine an einem Dachrahmen in Lage gehaltene Dichtungseinrichtung so weiterzubilden, daß sie bei einfachem Aufbau schnell und montagefreundlich am Dachrahmen befestigbar ist.

Erfindungsgemäß wird dies durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die einteilige Ausbildung des Dichtkörpers am Dachrahmen ein einfacher kostengünstiger Aufbau und eine wesentlich verbesserte Montage und Einstellung des Dichtkörpers am Dachrahmen ermöglicht wird. Die unmittelbare Befestigung am Dachrahmen ist möglich, da ein Profilabschnitt des Dichtkörpers über eine lösbare Schnappverbindung mit dem Dichtkörper verbindbar ist. Zum Einsetzen und Eindrehen der Schraube wird der Profilabschnitt in eine die Zugänglichkeit zur Schraube gewährende Freigabestellung verschwenkt.

Eine mit dem Halteabschnitt verbundene bzw. in diesen eingebettete Verstärkungseinlage ist etwa U-förmig profiliert, wobei ein erster außenliegender Schenkel dazu dient, daß sich die Sichtscheibe bei relativ hohen Fahrgeschwindigkeiten und dem dann entstehenden Unterdruck an den Fahrzeuglängsseiten nur um einen definierten Betrag nach außen bewegen kann. Der erste Schenkel bewirkt quasi ein Verkrallen der Scheibe mit dem Dichtkörper.

Im Bereich des zweiten Schenkels der Verstärkungseinlage ist die lösbare Schnappverbindung vorgesehen, die ein einfaches Lösen bzw. Verbinden der beiden Teile des Dichtkörpers gewährleistet. Bei einer ersten Ausführungsform ist die Schnappverbindung zwischen dem Profilabschnitt und dem Halteabschnitt vorgesehen, wogegen bei einer zweiten Ausführungsform die Schnappverbindung zwischen dem Profilabschnitt und der Verstärkungseinlage des Dichtkörpers ausgebildet ist.

Ein Ausführungsbeispiel der Erfindung ist in der Zeichnung dargestellt und wird im folgenden näher erläutert:

Es zeigt
- Fig. 1: eine Seitenansicht eines Personenwagens
- Fig. 2: einen Schnitt nach der Linie II-II der Fig. 1 in größerem Maßstab einer ersten Ausführungsform einer Dichtungseinrichtung
- Fig. 3: einen Schnitt ähnlich Fig. 2 einer zweiten Ausführungsform der Dichtungseinrichtung

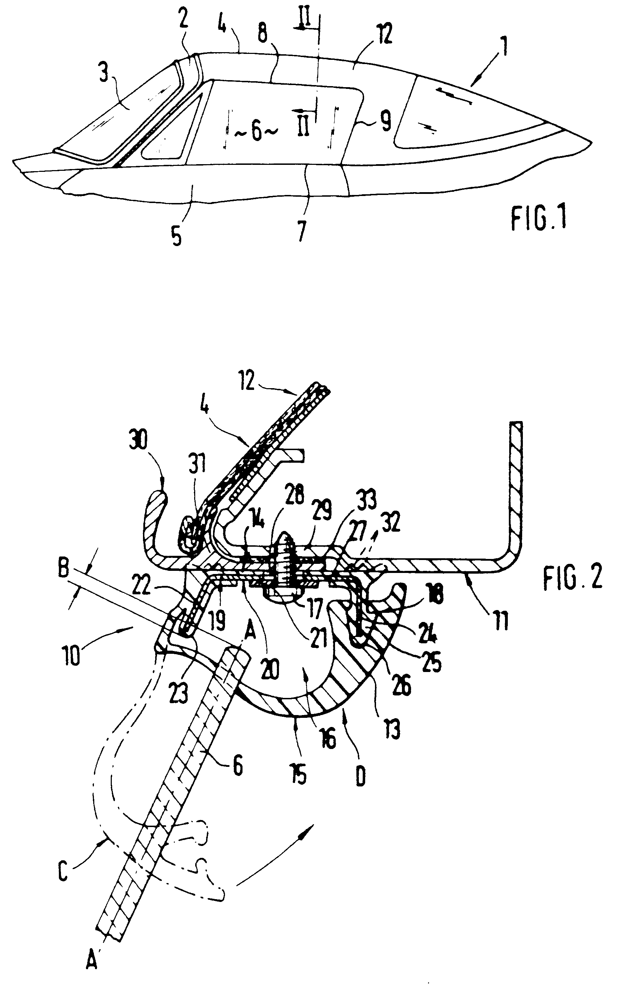

Das durch einen Personenwagen gebildete Kraftfahrzeug 1 umfaßt im dargestellten Bereich eine von einem Rahmen 2 gehaltene Windschutzscheibe 3, ein Dach 4 sowie seitliche Türen 5 (Fig.1).

Jede Tür 5 weist eine höhenverstellbare Sichtscheibe 6 auf, die in nicht näher dargestellten Führungsschienen innerhalb des Türkörpers verschiebbar gelagert ist. Die Sichtscheibe 6 ist oberhalb einer Gürtellinie 7 zumindest entlang ihres etwa horizontal verlaufenden oberen Randes 8 und einer hinteren vertikalen Begrenzung 8 rahmenlos ausgebildet.

Der obere Rand 8 der Sichtscheibe 6, die durch eine Türfensterscheibe dargestellt ist, wirkt gemäß Fig. 2 mit einer Dichtungseinrichtung 10 zusammen, die an einem seitlichen Dachrahmen 11 des Daches 4 befestigt ist.

Der Dachrahmen 11 bildet im Ausführungsbeispiel die seitliche Begrenzung eines Faltverdeckes 12. Es besteht aber auch die Möglichkeit, daß der Dachrahmen 11 Teil eines herausnehmbaren Daches oder eines fest mit der Karosserie verbundenen Daches ist.

Die Dichtungseinrichtung 10 umfaßt gemäß einer ersten Ausführungsform (Fig. 2) einen Dichtkörper 13, der sich im wesentlichen aus einem benachbart dem Dachrahmen 11 verlaufenden Halteabschnitt 14 und einem mit der Sichtscheibe 6 zusammenwirkenden Profilabschnitt 15 zusammensetzt. Der Halteabschnitt 14 und der an diesen angeschlossene Profilabschnitt 15 definieren zumindest einen innenliegenden, geschlossenen Hohlraum 16.

Erfindungsgemäß ist vorgesehen, daß der schlauchförmige Dichtkörper 13 ohne Zwischenschaltung eines zusätzlichen Halteelementes unmittelbar am Dachrahmen 11 angeschraubt ist. Die Schraube 17 ist in einem mittleren Bereich der Quererstreckung des Dichtkörpers 13 angeordnet. Dies wird dadurch ermöglicht, daß der mit der Sichtscheibe 6 zusammenwirkende Profilabschnitt 15 über eine Schnappverbindung 18 mit dem Halteabschnitt 14 lösbar verbunden ist.

Bei der Montage der Dichtungseinrichtung 10 befindet sich der Profilabschnitt 15 entsprechend dem Anlieferungszustand des Dichtkörpers 13 in einer strichpunktiert dargestellten Freigabestellung C, in der eine gute Zugänglichkeit zur Schraube 17 gegeben ist. Nach dem Einsetzen und Eindrehen der Schraube 17 wird der Profilabschnitt 15 nach oben geklappt und über die Schnappverbindung 18 mit dem Halteabschnitt 14 in einfacher Weise verbunden (Endstellung D).

Der Halteabschnitt 14 des Dichtkörper 13 ist mit einer Verstärkungseinlage 19 aus Metall oder Kunststoff versehen, wobei diese Verstärkungseinlage 19 gemäß Fig. 2 mit Ausnahme eines Auflagebereiches 20 für eine Unterlegscheibe 21 vollständig in das Material des Halteabschnitts 14 eingebettet ist.

Die Verstärkungseinlage 19 ist etwa U-förmig profiliert. Ein erster, außenliegender Schenkel 22 der Verstärkungseinlage 19 verläuft annähernd parallel zur Ebene A-A der Sichtscheibe 6, wobei der Schenkel 22 bzw. dessen Ummantelung 23 die Sichtscheibe 6 um ein Maß B nach unten hin überragen.

Der Schenkel 22 kann auch unter einem Winkel zur Sichtscheibenebene A-A verlaufen.

Bei relativ hohen Fahrgeschwindigkeiten tritt an den Fahrzeuglängsseiten ein Unterdruck auf, der insbesondere bei Cabriolets die rahmenlosen Sichtscheiben 6 nach außen bewegt. Dies wird bei der erfindunsgemäßen Ausführung durch den Schenkel 22 und den Profilabschnitt 15, der sich um das freie Ende des Schenkels 22 legt, vermieden.

Der zweite Schenkel 24 der Verstärkungseinlage 19 ist etwa rechtwinkelig zum Dachrahmen 11 ausgerichtet. Im Bereich des freien Endes des ebenfalls nach unten hin gerichteten Schenkels 24 ist die lösbare Schnappverbindung 18 vorgesehen.

Die Schnappverbindung 18 umfaßt ein widerhakenförmig ausgebildetes Element 25, das mit einer korrespondierenden hinterschnittenen Aufnahme 26 zusammenwirkt.

Gemäß Fig. 2 ist die Schnappverbindung 18 an dem dem Innenraum zugekehrten Schenkel 24 der Verstärkungseinlage 19 vorgesehen.

Das widerhakenförmige Element 25 ist dem Halteabschnitt 14 zugeordnet, wogegen die hinterschnittene Aufnahme 26 am Profilabschnitt 15 ausgebildet ist. Im Bereich der Aufnahme 26 teilt sich der Profilabschnitt 15 in zwei Lippenabschnitte auf. Die beiden Elemente der Schnappverbindung 18 können auch umgekehrt ausgebildet sein. Das widerhakenförmige Element 25 erstreckt sich beiderseits des nach unten gerichteten Schenkels 24 und umgibt diesen allseitig.

Ein etwa parallel zur Unterseite des Dachrahmens 11 verlaufender Verbindungssteg 27 zwischen den beiden Schenkeln 22,24 sowie der Halteabschnitt 14 weisen im Bereich der Schraube 17 eine Durchgangsbohrung 28 auf, die einen wesentlich größeren Durchmesser besitzt als der Durchmesser der Schraube 17. Hierdurch ist eine Einstellmöglichkeit, insbesondere in Fahrzeugquerrichtung, gegeben.

Gemäß Fig.2 ist zwischen einem außenliegenden, nach oben hin abgesetzten Abschnitt 29 des Dachrahmens 11 und dem Halteabschnitt 14 des Dichtkörpers 13 eine eine Regenrinne 30 bildende Leiste 31 eingeschoben, die mit der Schraube 17 zusammen mit dem Dichtkörper 13 am Dachrahmen 11 in Lage gehalten ist. Der Halteabschnitt 14 weist auf der der Leiste zugekehrten Seite mehrere vorstehende Längsrillen 32 auf.Die Leiste 31 ist zusätzlich über ein doppelseitiges Klebeband 33 an der Unterseite des Abschnitts 29 des Dachrahmens 11 befestigt.

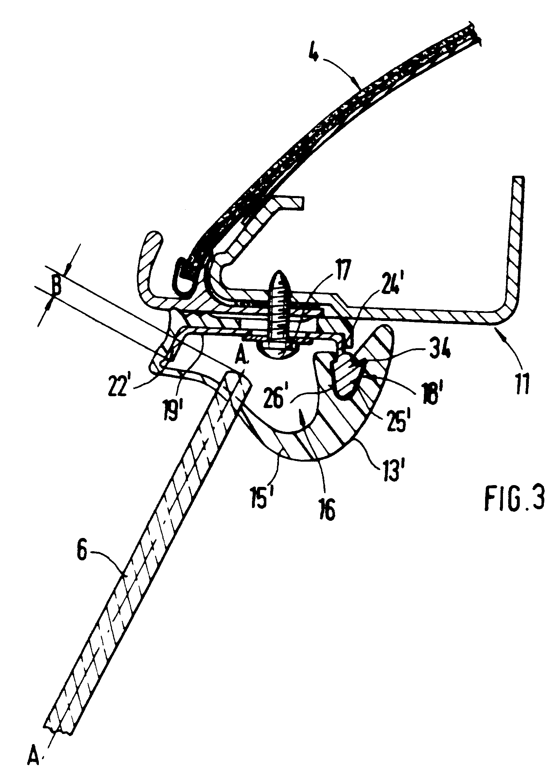

Fig. 3 zeigt eine zweite Ausführungsform einer Dichtungseinrichtung 10, wobei der Dichtkörper 13' eine Endstellung D einnimmt.

Der Dichtkörper 13' setzt sich aus einem benachbart dem Dachrahmen 11 verlaufenden Halteabschnitt 14' und einem mit der Sichtscheibe 6 zusammenwirkenden Profilabschnitt 15' zusammen. Bei der zweiten Ausführungsform wird die Verstärkungseinlage 19' durch ein Strangpreßprofil aus Metall (Alu) oder Kunststoff gebildet, das mit dem Halteabschnitt 14' durch Kleben oder Vulkanisieren fest verbunden ist. Die Verstärkungseinlage 19' liegt an der dem Dachrahmen 11 abgekehrten Seite des Halteabschnittes 14' an und ist an diesem befestigt.

Es besteht jedoch auch die Möglichkeit, daß die Verstärkungseinlage 19' zumindest abschnittsweise in den Halteabschnitt 14' eingebettet ist.
Gemäß Fig. 3 ist die lösbare Schnappverbindung 18' zwischen dem Profilabschnitt 15' und der Verstärkungseinlage 19' des Dichtkörpers 13' vorgesehen.
Die Schnappverbindung 18' umfaßt ebenso wie bei der ersten Ausführungsform ein widerhakenförmig ausgebildetes Element 25', das mit einer korrespondierenden hinterschnittenen Aufnahme 26' zusammenwirkt.
Die Aufnahme 26' ist am Profilabschnitt 15 ausgebildet, wogegen das widerhakenförmige Element 25' am Schenkel 24' der Verstärkungseinlage 19' vorgesehen ist. Das widerhakenförmige Element 25' wird durch eine Querschnittserweiterung 34 im Bereich des freien Endes des Schenkels 24' gebildet, wobei die Form der Querschnittserweiterung 34 der Aufnahme 26' angepaßt ist.

## Patentansprüche

1. Dichtungseinrichtung (10, 10') für eine vorzugsweise rahmenlose Sichtscheibe eines Kraftfahrzeuges, die an einem darüberliegenden seitlichen Dachrahmen (11) mittels Schrauben (17) in Lage gehalten ist und einen Dichtkörper (13, 13') umfaßt, der einen benachbart des Dachrahmens (11) verlaufenden Halteabschnitt (14, 14') und einen zumindest einen Hohlraum (16, 16') begrenzenden und mit der Sichtscheibe (6) zusammenwirkenden Profilabschnitt (15, 15') aufweist, **dadurch gekennzeichnet**, daß der Dichtkörper (13, 13') ohne Zwischenschaltung eines zusätzlichen Halteelementes mittels Schrauben (17) unmittelbar am Dachrahmen (11) befestigt ist, wobei der mit der Sichtscheibe (6) zusammenwirkende Profilabschnitt (15, 15') zum Einsetzen und Eindrehen der Schraube (17) eine nach unten gerichtete Freigabestellung C einnimmt und daß der Profilabschnitt (15, 15') über eine Schnappverbindung (18, 18') mit dem Dichtkörper (13, 13') lösbar verbindbar ist.

2. Dichtungseinrichtung nach Anspruch 1, **dadurch gekennzeichnet**, daß in dem dem Dachrahmen (11) zugekehrten Halteabschnitt (14, 14') eine Verstärkungseinlage (19, 19') vorgesehen ist.

3. Dichtungseinrichtung nach den Ansprüchen 1 und 2, **dadurch gekennzeichnet**, daß die mit dem Halteabschnitt (14, 14')verbundene bzw. in diesen eingebettete Verstärkungseinlage (19, 19') etwa U-förmig profiliert ist.

4. Dichtungseinrichtung nach Anspruch 3, **dadurch gekennzeichnet**, daß ein erster außenliegender Schenkel (22, 22') der Verstärkungseinlage (19, 19') annähernd parallel zur Scheibenebene A-A der Sichtscheibe (6) ausgerichtet ist, wobei dieser Schenkel (22, 22') bzw. dessen Ummantelung (23) die Sichtscheibe (6) nach unten hin um ein Maß B überragt.

5. Dichtungseinrichtung nach den Ansprüchen 1 bis 3, **dadurch gekennzeichnet**, daß der zweite Schenkel (24, 24') der Verstärkungseinlage (19, 19') etwa rechtwinkelig zum Dachrahmen (11) ausgerichtet ist und daß im Bereich des zweiten Schenkels (24, 24') die lösbare Schnappverbindung (18, 18') vorgesehen ist.

6. Dichtungseinrichtung nach den Ansprüchen 1 bis 5, **dadurch gekennzeichnet**, daß der Profilabschnitt (15) über die Schnappverbindung (18) mit dem Halteabschnitt (14) des Dichtkörpers (13) lösbar verbindbar ist.

7. Dichtungseinrichtung nach den Ansprüchen 1 und 6, **dadurch gekennzeichnet**, daß die Schnappverbindung (18) ein widerhakenförmiges Element (25) aufweist, das mit einer korrespondierenden hinterschnittenen Aufnahme (26) zusammenwirkt.

8. Dichtungseinrichtung nach Anspruch 7, **dadurch gekennzeichnet**, daß das widerhakenförmige Element (25) am Halteabschnitt (14) und die Aufnahme (26) am Profilabschnitt (15) des Dichtkörpers (13) ausgebildet sind.

9. Dichtungseinrichtung nach einem oder mehreren der vorangegangenen Ansprüche, **dadurch gekennzeichnet**, daß die Verstärkungseinlage (19) im Bereich einer Unterlegscheibe (21) für die Schraube (17) örtlich keine Ummantelung aufweist, so daß die Unterlegscheibe (21) unmittelbar auf der Verstärkungseinlage (19) aufliegt.

10. Dichtungseinrichtung nach einem oder mehreren der vorangegangenen Ansprüche, **dadurch gekennzeichnet**, daß der Profilabschnitt (15') über die Schnappverbindung (18') mit der Verstärkungseinlage (19') des Dichtkörpers (13') lösbar verbindbar ist.

11. Dichtungseinrichtung nach Anspruch 10, **dadurch gekennzeichnet**, daß die Schnappverbindung (18') durch eine am Profilabschnitt (15') angeordnete hinterschnittene Aufnahme (26') und ein an der Verstärkungseinlage (19') vorgesehenes widerhakenförmige Element (25') gebildet wird, wobei das Element (25') im Bereich des freien, nach unten gerichteten Endes des Schenkels (24') vorgesehen ist und durch eine Querschnittserweiterung (34) des Schenkels (24') gebildet wird.

## Claims

1. A sealing device (10, 10') for a preferably frameless window pane of a motor vehicle, held in position on a lateral roof frame (11) opposite thereto by means of screws (17) and provided with a sealing member (13, 13') which comprises a retaining portion (14, 14') extending adjacent to the roof frame (11) and a sectioned portion (15, 15') bounding at least one cavity (16, 16') and cooperating with the window pane (6), **characterized in that** the sealing member (13, 13') is secured directly to the roof frame (11) by means of screws (17) without the interposition of an additional retaining member, wherein the sectioned portion (15, 15') cooperating with the window pane (6) occupies a release position **C** directed downwards for the insertion and tightening of the screw (17), and the sectioned portion (15, 15') can be releasably connected to the sealing member (13, 13') by way of a snap fastening (18, 18').

2. A sealing device according to Claim 1, **characterized in that** a reinforcement inlay (19, 19') is provided in the retaining portion (14, 14') facing the roof frame (11).

3. A sealing device according to Claims 1 and 2, **characterized in that** the reinforcement inlay (19, 19') connected to the retaining portion (14, 14') or embedded therein has a substantially U-shaped section.

4. A sealing device according to Claim 3, **characterized in that** a first external arm (22, 22') of the reinforcement inlay (19, 19') is orientated substantially parallel to the plane **A-A** of the window pane (6), wherein the said arm (22, 22') or the covering (23) thereof projects downwards by an amount **B** beyond the window pane (6).

5. A sealing device according to one of Claims 1 to 3, **characterized in that** the second arm (24, 24') of the reinforcement inlay (19, 19') is orientated substantially at a right angle to the roof frame (11), and the releasable snap fastening (18, 18') is provided in the region of the second arm (24, 24').

6. A sealing device according to Claims 1 to 5, **characterized in that** the sectioned portion (15) can be releasably connected to the retaining portion (14) of the sealing member (13) by way of the snap fastening (18).

7. A sealing device according to Claims 1 and 6, **characterized in that** the snap fastening (18) comprises a barb-shaped member (25) which cooperates with a corresponding undercut receiving means (26).

8. A sealing device according to Claim 7, **characterized in that** the barb-shaped member (25) is formed on the retaining portion (14) and the receiving means (26) is formed on the sectioned portion (15) of the sealing member (13).

9. A sealing device according to one or more of the preceding Claims, **characterized in that** in the region of a washer (21) for the screw (17) the reinforcement inlay (19) has no covering locally, so that the washer (21) rests directly on the reinforcement inlay (19).

10. A sealing device according to one or more of the preceding Claims, **characterized in that** the sectioned portion (15') can be releasably connected to the reinforcement inlay (19') of the sealing member (13') by way of the snap fastening (18').

11. A sealing device according to Claim 10, **characterized in that** the snap fastening (18') is formed by an undercut receiving means (26') arranged on the sectioned portion (15') and by a barb-shaped member (25') provided on the reinforcement inlay (19'), wherein the member (25') is provided in the region of the free, downwardly directed end of the arm (24') and is formed by a cross-sectional widening (34) of the arm (24').

## Revendications

1. Dispositif d'étanchéité (10, 10') pour une vitre, de préférence sans cadre, d'un véhicule automobile, qui est maintenu en position, au moyen de vis (17), sur un cadre de toit (11) latéral, situé au-dessus, et comprend un corps d'étanchéité (13, 13'), qui présente une portion de maintien (14, 14'), s'étendant au voisinage du cadre de toit (11) et une portion profilée (15, 15') délimitant au moins une cavité (16, 16') et coopérant avec la vitre (6), caractérisé en ce que le corps d'étanchéité (13, 13') est fixé directement sur le cadre de toit (11), au moyen de vis (17), sans l'intermédiaire d'un élément de maintien supplémentaire, la portion profilée (15, 15') coopérant avec la vitre (6) prenant une position de dégagement (C), dirigée vers le bas, pour l'introduction et le serrage de la vis (17), et en ce que la portion profilée (15, 15') peut être assemblée de manière amovible avec le corps d'étanchéité (13, 13'), par un assemblage à déclic (18, 18').

2. Dispositif d'étanchéité selon la revendication 1, caractérisé en ce que dans la portion de maintien (14, 14'), tournée vers le cadre de toit (11), il est prévu une garniture de renfort (19, 19').

3. Dispositif d'étanchéité selon les revendications 1 et 2, caractérisé en ce que la garniture de renfort (19, 19') reliée à la portion de maintien (14, 14') ou intégrée dans celle-ci, est profilée à peu près en U.

4. Dispositif d'étanchéité selon la revendication 3, caractérisé en ce qu'une première branche (22, 22') située à l'extérieur de la garniture de renfort (19, 19') est orientée à peu près parallèlement au plan (A-A) de la vitre (6), cette branche (22, 22') ou son gainage (23), dépassant vers le bas de la vitre (6), d'une cote (8).

5. Dispositif d'étanchéité selon les revendications 1 à 3, caractérisé en ce que la deuxième branche (24, 24') de la garniture de renfort (19, 19') est orientée à peu près à angle droit par rapport au cadre de toit (11) et en ce que dans la zone de la deuxième branche (24, 24'), est prévu l'assemblage à déclic (18, 18') amovible.

6. Dispositif d'étanchéité selon les revendications 1 à 5, caractérisé en ce que la portion profilée (15) peut être assemblée de manière amovible avec la portion de maintien (14) du corps d'étanchéité (13), par l'assemblage à déclic (18).

7. Dispositif d'étanchéité selon les revendications 1 et 6, caractérisé en ce que l'assemblage à déclic (18) présente un élément (25) en forme de crochet, qui coopère avec un logement (26) détalonné correspondant.

8. Dispositif d'étanchéité selon la revendication 7, caractérisé en ce que l'élément (25) en forme de crochet est formé sur la portion de maintien (14) et le logement (26), sur la portion profilée du corps d'étanchéité (13).

9. Dispositif d'étanchéité selon une ou plusieurs des revendications précédentes, caractérisé en ce que la garniture de renfort (19) ne présente localement aucun gainage dans la zone d'une rondelle (21) pour la vis (17), de sorte que la rondelle (21) repose directement sur la garniture de renfort (19).

10. Dispositif d'étanchéité selon une ou plusieurs des revendications précédentes, caractérisé en ce que la portion profilée (15') peut être reliée de manière amovible, par l'assemblage à déclic (18'), avec la garniture de renfort (19') du corps d'étanchéité (13').

11. Dispositif d'étanchéité selon la revendication 10, caractérisé en ce que l'assemblage à déclic (18') est formé par un logement (26') détalonné, situé sur la portion profilée (15') et un élément (25') en forme de crochet, prévu sur la garniture de renfort (19'), l'élément (25') étant prévu dans la zone de l'extrémité libre, dirigée vers la bas, de la branche (24') et étant formé par un élargissement (34) de la section transversale de la branche (24').
